# EUROPÄISCHE PATENTSCHRIFT

(11) **EP 3 930 453 B1**
(45) Veröffentlichungstag und Bekanntmachung des Hinweises auf die Patenterteilung: **07.06.2023**
(21) Anmeldenummer: 20706199.5
(22) Anmeldetag: 18.02.2020
(51) Int. Cl.: A01M 7/00, A01M 21/00, G05D 1/02, A01B 39/18

(54) **VORRICHTUNG UND VERFAHREN ZUR ENTFERNUNG ODER VERNICHTUNG VON UNKRAUTPFLANZEN**
DEVICE AND METHOD FOR REMOVING OR DESTROYING WEEDS
DISPOSITIF ET PROCÉDÉ POUR ÉLIMINER OU DÉTRUIRE DES MAUVAISES HERBES

(30) Priorität: 26.02.2019 AT 600482019
(43) Veröffentlichungstag der Anmeldung: 05.01.2022
(73) Patentinhaber: Aventum GmbH, 2424 Zurndorf (AT); Schneemayer, Andreas, 2424 Zurndorf (AT)
(72) Erfinder: NEUMANN, Albert, 2424 Zurndorf (AT); SCHNEEMAYER, Andreas, 2424 Zurndorf (AT)
(74) Vertreter: Puchberger & Partner Patentanwälte
(86) Internationale Anmeldenummer: PCT/EP2020/054171
(87) Internationale Veröffentlichungsnummer: WO 2020/173752

(56) Entgegenhaltungen:
- EP-A1- 3 357 332
- CN-U- 204 930 106
- DE-A1-102017 205 293
- US-A1- 2017 112 118
- US-A1- 2017 359 943

## Beschreibung

Die Erfindung betrifft eine Vorrichtung und ein Verfahren zur Entfernung oder Vernichtung von Unkrautpflanzen, sowie ein Arbeitsgerät mit einer derartigen Vorrichtung.

Im modernen Biolandbau, aber auch in der konventionellen Landwirtschaft, ist die gezielte Unkrautbekämpfung, vor allem bei Spezialkulturen von Kulturpflanzen, insbesondere Nutzpflanzen wie Zuckerrübe, Gemüse und dergleichen, oder Zierpflanzen wie Stauden oder Schnittblumen, eine Herausforderung. Zwar existieren Vorrichtungen, welche mittels einer optischen Kamerasteuerung in der Lage sind, Kulturpflanzen von Unkrautpflanzen zu unterscheiden. Dabei fährt ein Arbeitsgerät, beispielsweise ein Traktor oder ein Roboter mit einem Systemaufbau über das Ackerfeld und eine Kamera macht Einzelbilder von den Kultur- und Unkrautpflanzen. Diese Bilder werden in einem Computer mittels künstlicher Intelligenz in Echtzeit verarbeitet. Der Computer soll dabei die exakte Position der Kulturpflanzen bestimmen und dem Gerät zur Unkrautentfernung weitergeben. Bei optimalen Verhältnissen gelingt dies auch, und die Maschine entfernt das Unkraut, ohne dabei die Kulturpflanze zu zerstören. Diese bekannten Systeme arbeiten jedoch nur zufriedenstellend, wenn wenig Unkraut vorhanden ist, sich die Kulturpflanze deutlich von den Unkrautpflanzen unterscheidet, und gute Licht- und Windverhältnisse vorherrschen.

Systeme und Verfahren zur automatischen Detektion und Auswahl von Unkrautpflanzen sind beispielsweise aus der EP 3 357 332 A1 und der DE 10 2017 205 293 A1 bekannt. Zum allgemeinen Stand der Technik zählende Vorrichtungen und Verfahren in Bezug auf die Detektion von Pflanzen bzw. zur Ausbringung unterschiedlicher Mittel sind unter anderem aus der US 2017/359934 A1, der US 2017/112118 A1 und der CN 204930106 U bekannt.

Eine Aufgabe der Erfindung besteht somit darin, eine Echtzeit-Erkennung der Unkrautpflanzen und anderer Bodeneigenschaften auch im Falle vieler Unkräuter, sowie bei schlechten optischen und klimatischen Verhältnissen zu ermöglichen.

Diese Aufgabe wird erfindungsgemäß durch eine Vorrichtung und ein Verfahren gemäß den unabhängigen Patentansprüchen gelöst.

Erfindungsgemäß werden direkt am Feld Bilder von zumindest einer Kamera aufgenommen und als Ganzes oder in Teilbildern an zumindest ein Endgerät übermittelt. Das Endgerät kann direkt vor Ort angeordnet sein, oder in einem Netzwerk wie dem Internet. An dem oder den Endgeräten betrachten menschliche Nutzer diese Bilder und bestimmen mit Hilfe von Eingabegeräten die Positionen von Kulturpflanzen, Unkrauptflanzen oder Bodenstrukturen. Diese Positionsdaten werden zurück an ein Gerät zur Unkrautentfernung übermittelt, wodurch dieses in die Lage versetzt wird, den Boden zu bearbeiten, ohne die Kulturpflanzen zu schädigen.

In einer erfindungsgemäßen Ausführungsform kann vorgesehen sein, dass ein Traktor oder ein anderes Arbeitsgerät wie z.B. ein Roboter mit dem Systemaufbau über das Ackerfeld mit einer bestimmten Geschwindigkeit fährt. Eine Kamera, welche auch am Frontanbau des Traktors angebracht werden kann, macht Einzelbilder von den Kultur- und Unkrautpflanzen. Diese Bilder werden von einer Datenverarbeitungseinheit wie einem Computer gegebenenfalls an einen Router weitergeleitet, welcher kabellos über Funk, LTE, 5G, WLAN oder dergleichen die Bilder der Pflanzen auf einen Server sendet. Über ein Interface können Menschen (Teleworker) von deren PC-Arbeitsplatz (oder Tablet, Handy und dergleichen) die Kulturpflanzen oder umgekehrt die Unkrautpflanzen mittels Mausklick oder Touchscreen-Interaktion auswählen. Der Server vergleicht die Ergebnisse und wertet diese gegebenenfalls statistisch aus. Dadurch werden falsche Pflanzenbestimmungen aussortiert, und die korrekte Position (x/y-Koordinate) der Kulturpflanzen und/oder der Unkrautpflanzen bestimmt. Dieses Ergebnis wird gegebenenfalls über den Router an den Computer zurück gesendet. In der Zwischenzeit hat sich die Position des Traktors und somit auch die Position der Pflanzen gegenüber der vorderen Kamera geändert. Mittels einer Software werden auf den Einzelbildern der Kamera und den statistisch ausgewerteten Ergebnisbildern der Teleworker eindeutige Punkte identifiziert und einander zugeordnet. Dadurch kann die ermittelte Position (x/y-Koordinate) an das Gerät zur Unkrautentfernung weitergegeben werden, welches auch abschließend die Unkräuter entfernt.

Die Bildübertragung kann mittels Funk an einen Server erfolgen, welcher die Bilder über ein Web-Interface an Teleworker weltweit bereitstellt. Mittels eines einfachen Login-Verfahrens auf einer Webseite können somit beliebig viele menschliche Benutzer an der Pflanzenerkennung teilnehmen. Die Pflanzenerkennung kann auch als Spiel oder Captcha-Algorithmus implementiert werden, um von möglichst vielen menschlichen Benutzern Rückmeldungen zu erhalten.

Da mehrere Teleworker gleichzeitig dieselben Aufgaben zugeteilt bekommen, können die Ergebnisse auch durch einen Server oder durch die Datenverarbeitungseinheit statistisch ausgewertet werden, um Fehlbestimmungen zu eliminieren. Danach kann das Bild mit den Positionsdaten an den Computer vor Ort mittels Funk zurückgesendet werden. Zu dem Zeitpunkt t₀ + Δt kommen die Informationen der erkannten Pflanzen von den Teleworkern am Ackerfeld zurück, während gegebenenfalls mit einer zweiten Kamera laufend weitere Bilder aufgenommen werden.

Das zurückgesendete Bild der ersten Kamera mit den Positionsdaten der Pflanzenpositionen (x/y-Koordinate) kann mittels Software mit den laufenden Bildaufnahmen einer zweiten Kamera, welche mit dem Gerät zur Unkrautentfernung starr verbunden ist, übereinandergelegt werden. Dadurch wird die Positionsänderung des ganzen Systems vom Zeitpunkt t₀ zum Zeitpunkt t₀+Δt kompensiert und die Lage der erkannten Pflanzen gegenüber der Maschine zur Unkrautentfernung synchronisiert. Durch die somit absolute Definition der Position der Pflanzen kann die korrekte Ansteuerung des Gerätes zur Unkrautentfernung vom Computer vorgenommen werden.

Insbesondere umfasst eine erfindungsgemäße Vorrichtung zur Entfernung oder Vernichtung von Unkrautpflanzen eine erste Bildaufnahmeeinrichtung zur Aufnahme eines ersten Bodenbildes, eine damit verbundene Datenverarbeitungseinheit und ein von der Datenverarbeitungseinheit angesteuertes landwirtschaftliches Gerät, das zur punktuellen Entfernung oder Vernichtung von Unkraut ausgebildet ist. Die Datenverarbeitungseinheit, beispielsweise ein Computer, ist dazu ausgeführt, das erste Bodenbild von der ersten Bildaufnahmeeinrichtung entgegenzunehmen.

Die Datenverarbeitungseinheit ist ferner dazu ausgebildet, von zumindest einem verbundenen Endgerät manuell ermittelte Positionsdaten entgegenzunehmen, welche die Position von auf dem ersten Bodenbild durch einen oder mehrere Benutzer erkannten Unkrautpflanzen und/oder Kulturpflanzen und/oder Bodenstrukturen, beispielsweise Pflanzreihen, kennzeichnen. Die Datenverarbeitungseinheit ist ferner dazu ausgeführt, das landwirtschaftliche Gerät mit den korrigierten Positionsdaten derart anzusteuern, dass es die Unkrautpflanzen selektiv entfernt oder vernichtet.

Die Datenverarbeitungseinheit kann dazu ausgebildet sein, das erste Bodenbild direkt oder über eine Kommunikationseinrichtung an zumindest ein, vorzugsweise jedoch eine Vielzahl verbundener Endgeräte zu übermitteln und von zumindest einem dieser Endgeräte die Positionsdaten entgegenzunehmen. Beispielsweise können sich die Datenverarbeitungseinheit und die Endgeräte in einem gemeinsamen Netzwerk, beispielsweise W-LAN, befinden. Die Datenverarbeitungseinheit kann aber auch das erste Bodenbild über eine Kommunikationseinrichtung an einen Server übermitteln und vom Server die Positionsdaten entgegennehmen. Insbesondere können sich die Datenverarbeitungseinheit, der Server und die Endgeräte im Internet oder einem anderen Netzwerk befinden. Im Falle einer Verbindungsstörung kann jedoch auch vorgesehen sein, dass an der Datenverarbeitungseinheit selbst Eingaben gemacht werden können, beispielsweise vom Fahrer des Arbeitsgeräts.

Erfindungsgemäß ist insbesondere auch eine rein lokale Anwendung vorgesehen, bei der sich die Datenverarbeitungseinheit und die Endgeräte der Benutzer in einem gemeinsamen Netzwerk befinden, beispielsweise in einem ad-hoc aufgebauten W-LAN. Die Benutzer können sich auch direkt am Feld oder in der Nähe des Arbeitsgeräts befinden.

Es kann erfindungsgemäß vorgesehen sein, dass eine mit der Datenverarbeitungseinheit verbundene zweite Bildaufnahmeeinrichtung zur Aufnahme eines zweiten Bodenbildes vorgesehen ist, um einen laufenden Betrieb zu ermöglichen. Die Datenverarbeitungseinheit ist dabei dazu ausgeführt, das zweite Bodenbild von der zweiten Bildaufnahmeeinrichtung entgegenzunehmen und dem ersten Bodenbild zu überlagern, um einen ein- oder zweidimensionalen Verschiebungsvektor zu erhalten.

Der Verschiebungsvektor kann dann verwendet werden, um die Positionsdaten zu korrigieren, sodass korrigierte Positionsdaten erhalten werden. Das landwirtschaftliche Gerät kann dann mit den korrigierten Positionsdaten angesteuert werden. Dadurch können Ungenauigkeiten ausgeglichen werden, die entstehen, wenn die Geschwindigkeit des Arbeitsgeräts und der zeitliche Abstand zwischen Aufnahme eines Bildes und Aktivierung des landwirtschaftlichen Geräts nicht exakt aufeinander abgestimmt sind.

Die erste und/oder die zweite Bildaufnahmeeinrichtung können sich in unmittelbarer Nähe des landwirtschaftlichen Geräts befinden, vorzugsweise in einem Abstand von unter 1 m und besonders bevorzugt auf diesem montiert sein oder ein Teil des landwirtschaftlichen Geräts sein. Die erste Bildaufnahmeeinrichtung und das landwirtschaftliche Gerät können auf einer Trägervorrichtung mit einer Koppelvorrichtung zur Verbindung mit einem fahrbaren Arbeitsgerät angeordnet sein. Auch die zweite Bildaufnahmeeinrichtung und das landwirtschaftliche Gerät können auf einer Trägervorrichtung mit einer Koppelvorrichtung zur Verbindung mit einem fahrbaren Arbeitsgerät angeordnet sein.

Der Abstand der ersten Bildaufnahmeeinrichtung zur zweiten Bildaufnahmeeinrichtung kann mehr als 3 m, vorzugsweise mehr als 5 m, besonders bevorzugt mehr als 7 m betragen.

Das landwirtschaftliche Gerät kann ein zur punktuellen Bodenbearbeitung ausgeführtes Jätwerkzeug, eine zur punktuellen Bodenbearbeitung ausgeführte Unkrautspritze, ein zur punktuellen Bodenbearbeitung ausgeführtes Flammgerät oder dergleichen sein.

Die Erfindung umfasst ferner ein fahrbares Arbeitsgerät mit einer erfindungsgemäßen Vorrichtung zur Entfernung oder Vernichtung von Unkraut. Vorzugsweise kann es sich dabei um ein autonom fahrbares Arbeitsgerät handeln. Die Vorrichtung zur Entfernung oder Vernichtung von Unkraut kann derart am Arbeitsgerät angeordnet sein, dass die erste Bildaufnahmeeinrichtung in einem Winkel von etwa 90° zur Fahrtrichtung auf den Boden gerichtet ist, um Unkrautpflanzen und/oder Kulturpflanzen besonders deutlich zu erfassen.

Alternativ kann die Vorrichtung zur Entfernung oder Vernichtung von Unkraut auch derart am Arbeitsgerät angeordnet sein, dass die erste Bildaufnahmeeinrichtung in einem Winkel von vorzugsweise zwischen etwa 5° und etwa 45° zur Fahrtrichtung nach vorne gerichtet ist, um Bodenstrukturen, insbesondere Pflanzreihen, besonders gut zu erfassen. Dabei kann insbesondere vorgesehen sein, dass die erste Bildaufnahmeeinrichtung mittig zwischen den Rädern des Arbeitsgeräts angeordnet ist. Der Winkel der ersten Bildaufnahmeeinrichtung zur Fahrtrichtung kann verstellbar sein.

Erfindungsgemäß kann vorgesehen sein, dass die Vorrichtung zur Entfernung oder Vernichtung von Unkraut derart am Arbeitsgerät angeordnet ist, dass sich in der Fahrtrichtung des Arbeitsgeräts die erste Bildaufnahmeeinrichtung vor der zweiten Bildaufnahmeeinrichtung befindet. Insbesondere kann die erste Bildaufnahmeeinrichtung in Fahrtrichtung vor dem Arbeitsgerät und die zweite Bildaufnahmeeinrichtung in Fahrtrichtung hinter dem Arbeitsgerät angeordnet sein.

Es kann vorgesehen sein, dass die maximale Fahrgeschwindigkeit des Arbeitsgeräts im Betrieb unter 15 km/h, vorzugsweise unter 10 km/h, und besonders bevorzugt unter 5 km/h liegt, um zu erreichen, dass ausreichend Zeit zur Hin- und Her-Übermittlung der Datensätze und zur Detektion der Pflanzen bleibt.

Die Erfindung erstreckt sich ferner auf ein Verfahren zur Entfernung oder Vernichtung von Unkraut mit einem, von einer Datenverarbeitungseinheit angesteuerten landwirtschaftlichen Gerät, das zur punktuellen Entfernung oder Vernichtung von Unkrautpflanzen ausgebildet ist. Ein erfindungsgemäßes Verfahren umfasst zumindest die folgenden Schritte:
In einem ersten Schritt, Aufnahme eines ersten Bodenbildes durch eine erste, mit der Datenverarbeitungseinheit verbundenen Bildaufnahmeeinheit.

In einem weiteren Schritt, Entgegennahme, durch die Datenverarbeitungseinheit, von einem verbundenen Endgerät, manuell bestimmter Positionsdaten, welche die Position von auf dem ersten Bodenbild durch einen oder mehrere Benutzer erkannten Unkrautpflanzen und/oder Kulturpflanzen und/oder Bodenstrukturen, beispielsweise Pflanzreihen, kennzeichnen.

In einem weiteren Schritt, Ansteuerung, durch die Datenverarbeitungseinheit, des landwirtschaftlichen Geräts auf Grundlage der Positionsdaten zur selektiven Entfernung oder Vernichtung von Unkrautpflanzen.

Erfindungsgemäß kann vorgesehen sein, dass die Datenverarbeitungseinheit das erste Bodenbild an eine Vielzahl verbundener Endgeräte übermittelt und von zumindest einem dieser Endgeräte die Positionsdaten entgegennimmt. Die Datenverarbeitungseinheit kann das erste Bodenbild über eine Kommunikationseinrichtung an einen Server übermitteln und vom Server die Positionsdaten entgegennehmen.

Die Datenverarbeitungseinheit kann auch ein zweites Bodenbild von einer zweiten Bildaufnahmeeinheit entgegennehmen und dem ersten Bodenbild zur Bestimmung eines Verschiebungsvektors überlagern, und die Positionsdaten zur Bestimmung korrigierter Positionsdaten um den Verschiebungsvektor korrigieren, und das landwirtschaftliche Gerät mit den korrigierten Positionsdaten ansteuern.

Der Server kann die ersten Bodenbilder an eine Vielzahl verbundener Endgeräte übermitteln, von zumindest einem der Endgeräte Positionsdaten entgegennehmen, und diese Positionsdaten an die Datenverarbeitungseinheit weiterleiten.

Der Server kann auch von mehreren Endgeräten Positionsdaten entgegennehmen, und diese Vielzahl an Positionsdaten einer statistischen Analyse unterwerfen, beispielsweise einer Bestimmung des Mittelwerts und der Standardabweichung der Positionsdaten, und das Ergebnis der statistischen Analyse an die Datenverarbeitungseinheit weiterleiten. Beispielsweise kann der Server eine Bestimmung des Mittelwerts und der Standardabweichung der Positionsdaten vornehmen.

Die Erfindung betrifft ferner ein computerlesbares Speichermedium, das computerlesbare Instruktionen umfasst, die eine Datenverarbeitungseinheit, die mit einer erfindungsgemäßen Vorrichtung bzw. einem erfindungsgemäßen Arbeitsgerät verbunden ist, zur Ausführung eines erfindungsgemäßen Verfahrens veranlassen. Beim Server muss es sich nicht um einen physisch vorhandene Komponente handeln, sondern es kann sich auch um einen Software-Server handeln. Insbesondere kann vorgesehen sein, dass der Server als Software-Server in der Datenverarbeitungseinheit am Arbeitsgerät integriert ist, sodass kein weiterer Server erforderlich ist, sondern die Datenverarbeitungseinheit beide Rollen übernimmt.

Eine erfindungsgemäße Vorrichtung und ein erfindungsgemäßes Verfahren können insbesondere auch dazu verwendet werden, eindimensionale Bodenstrukturen wie Kulturreihen (Pflanzreihen) zu erkennen und das landwirtschaftliche Gerät entsprechend anzusteuern, dass eine Bodenbearbeitung neben den Kulturreihen erfolgt. Hierzu kann eine Kamera unten durch das Arbeitsgerät, zwischen den Reifen mittig auf die Kulturreihe positioniert werden. Eine auf der Kameralinse markierte Mittellinie kann dabei immer ein paar Meter vor der Kamera auf die Reihe positioniert werden. Das aufgenommene Bild wird an Endgeräte gesendet und die manuellen Benutzer erkennen die Positionen der Kulturreihe, die als Positionsdaten zurückgeschickt werden. Dabei müssen nur eindimensionale (links/rechts) Positionsdaten verarbeitet werden, sodass sowohl die Erkennung, als auch die Verarbeitung schneller erfolgt. Das landwirtschaftliche Gerät kann somit den Boden exakt zwischen den Kulturreihen bearbeiten, wo auch das Unkraut entfernt werden kann.

Weitere erfindungsgemäße Merkmale ergeben sich aus den Patentansprüchen, den Figuren und der Beschreibung der Ausführungsbeispiele.

Die Erfindung wird nun an Hand von Ausführungsbeispielen näher erläutert. Es zeigen:
Fig. 1 eine schematische Darstellung einer ersten Ausführungsform einer erfindungsgemäßen Vorrichtung;
Fig. 2 eine schematische Darstellung einer zweiten Ausführungsform einer erfindungsgemäßen Vorrichtung;
Fig. 3 eine schematische Darstellung der Überlagerung und Zusammenfügung der aufgenommenen Bilder.

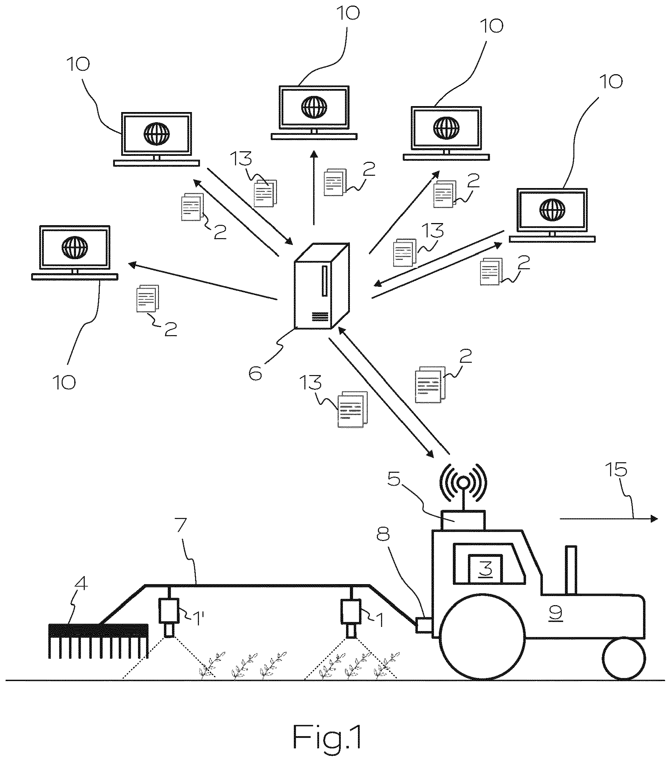

Fig. 1 zeigt eine schematische Darstellung einer ersten Ausführungsform einer erfindungsgemäßen Vorrichtung. Die Vorrichtung umfasst eine Trägervorrichtung 7 mit einer ersten Bildaufnahmeeinrichtung 1 in Form einer Kamera und einer zweiten Bildaufnahmeeinrichtung 1' in Form einer Kamera. Die beiden Kameras sind entlang der Fahrtrichtung 15 eines Arbeitsgeräts 9, beispielsweise eines Traktors, in einem Abstand von hier etwa 4 m auf der Trägervorrichtung 7 angeordnet und weisen nach unten, sodass sie die Vegetation am Boden aufnehmen können.

Die Trägervorrichtung 7 ist über eine Koppelvorrichtung 8 am Heck des Arbeitsgeräts 9 befestigt. In diesem Ausführungsbeispiel sind beide Kameras 1, 1' in Fahrtrichtung 15 hinter dem Arbeitsgerät 9 angeordnet. Die erste Bildaufnahmeeinrichtung 1 ist in Fahrtrichtung 15 vor der zweiten Bildaufnahmeeinrichtung 1' angeordnet.

In unmittelbarer Nähe der zweiten Bildaufnahmeeinrichtung 1', nämlich in einem Abstand von weniger als 0,5m, befindet sich ein landwirtschaftliches Gerät 4, das das zur punktuellen Entfernung oder Vernichtung von Unkraut ausgebildet ist. Im gegenständlichen Ausführungsbeispiel handelt es sich dabei um ein automatisches Jätwerkzeug. Dieses wird von einer Datenverarbeitungseinheit 3 mit x- und y-Koordinaten angesteuert und entfernt automatisch jene Pflanzen, die sich in einem von der zweiten Bildaufnahmeeinrichtung 1' aufgenommenen Bild an dieser Koordinatenstelle befinden. Zu diesem Zweck ist das landwirtschaftliche Gerät 4 über eine Datenschnittstelle drahtlos oder drahtgebunden mit der Datenverarbeitungseinheit 3 verbunden.

Im Betrieb bewegt sich das Arbeitsgerät 9 entlang der Fahrtrichtung 9 mit einer geringen Geschwindigkeit, im vorliegenden Ausführungsbeispiel etwa mit 5 km/h. Die erste Bildaufnahmeeinrichtung 1 nimmt während der Fahrt laufend erste Bodenbilder 2 auf und übermittelt diese an die Datenverarbeitungseinheit 3. Dabei hat der schematisch dargestellte, von den Kameras abgedeckte Bodenbereich in diesem Ausführungsbeispiel eine Abmessung von etwa 2,5m Breite und etwa 3m Länge.

Die Datenverarbeitungseinheit 3 übermittelt die ersten Bodenbilder 2 über eine Kommunikationseinrichtung 5, beispielsweise einen WLAN- oder LTE-Router, an einen entfernten Server 6 im Internet.

Der Server 6 verteilt die ersten Bodenbilder 2 an eine Vielzahl von Endgeräten 10, die sich ebenfalls im Internet befinden. Die Endgeräte 10 können schon vorab eine Verbindung mit dem Server 6 aufgebaut haben und laufend mit dem Server 6 in Verbindung stehen.

Auf den Endgeräten 10 werden die Bodenbilder 2 menschlichen Benutzern zur Ansicht gebracht. Bei diesen Benutzern handelt es sich um Personen, die Kenntnisse über Kulturpflanzen und Unkrautpflanzen haben, und somit auf den Bodenbildern 2 zwischen Kulturpflanzen und Unkrautpflanzen unterscheiden können. Zur Darstellung der Bodenbilder 2 können diese mit einem x-/y - Raster überlagert, sodass die Benutzer einfach angeben können, in welchem der Rasterblöcke sich Unkrautpflanzen befinden. Die Benutzer wählen jene Blöcke aus, in denen sich Unkrautpflanzen befinden; diese x- und y-Koordinaten werden als Positionsdaten 13 von den Endgeräten 10 an den Server 6 zurückgesendet. Dabei ist es nicht erforderlich, dass sämtliche Endgeräte 10 Positionsdaten 13 zurücksenden; wichtig ist jedoch, dass die Antwort binnen einer kurzen Zeitspanne erfolgt. Die Positionsdaten 13 werden vom Server 6 an die Datenverarbeitungseinheit 3 zurückgesendet.

Alternativ kann auch vorgesehen sein, dass die Bodenbilder 2 ohne ein spezifisches Raster angezeigt werden. Die Benutzer bestimmen dann mittels geeigneter Eingabegeräte, beispielsweise einer Maus oder einem Touch-Screen, die Positionsdaten 13, die dann von den Endgeräten 10 an den Server 6 gesendet werden.

Im vorliegenden Beispiel bewegt sich das Arbeitsgerät 9 mit einer Geschwindigkeit von 5 km/h in der Fahrtrichtung 15. Der Abstand zwischen erster Bildaufnahmeeinrichtung 1 und zweiter Bildaufnahmeeinrichtung beträgt etwa 4 m. Folglich erreicht die zweite Bildaufnahmeeinrichtung 1' nach etwa 3 Sekunden die Stelle des ersten Bodenbildes. Dies ist bereits ausreichend, um zumindest eine Rückmeldung eines der Endgeräte 10 bezüglich der Positionsdaten 13 von Unkrautpflanzen zu erhalten.

Die Datenverarbeitungseinheit 3 nimmt die vom Server 6 gesendeten Positionsdaten 13 entgegen. Wenn mehrere Positionsdatendatensätze 13 von verschiedenen Endgeräten einlangen, berechnet die Datenverarbeitungseinheit 3 daraus einen Mittelwert.

Um die tatsächliche Position des Arbeitsgeräts 4 in Bezug auf den Boden festzustellen, empfängt die Datenverarbeitungseinheit 3 nun von der zweiten Bildaufnahmeeinrichtung 1' ein zweites Bodenbild 2'. Die Datenverarbeitungseinheit 3 überlagert nun das erste Bodenbild 2 mit dem zweiten Bodenbild 2' und bestimmt daraus einen Verschiebungsvektor 14.

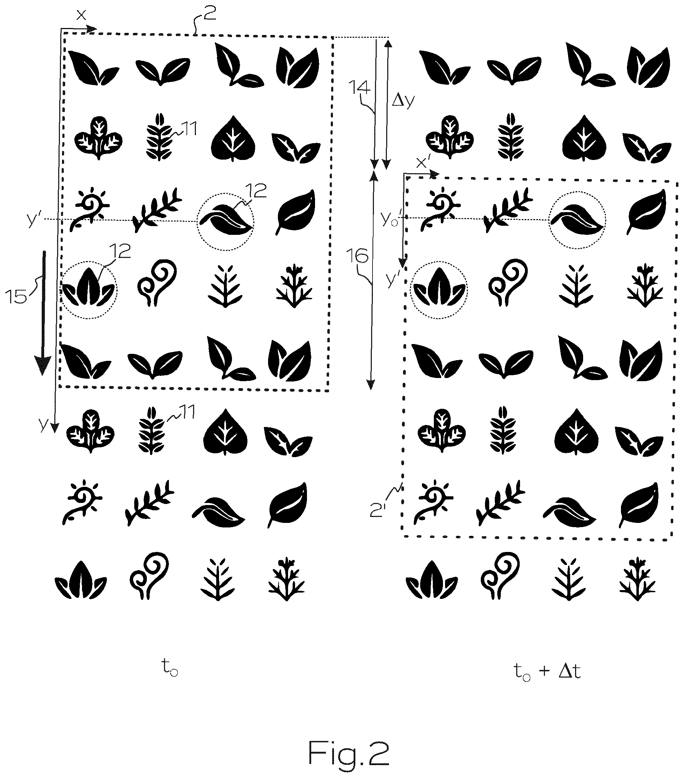

Fig. 2 veranschaulicht die Bestimmung des Verschiebevektors 14 aus den beiden Bodenbildern 2, 2'. Der linke Bereich zeigt das erste Bodenbild 2 zum Zeitpunkt t₀, in dem zwei Unkrautpflanzen 12 und eine Kulturpflanze 11 identifiziert wurden. Eine der identifizierten Unkrautpflanzen 12 befindet sich an der Position x₀, y₀. Das Arbeitsgerät 9 bewegt sich in Fahrtrichtung 15 weiter, und wenige Sekunden später, zum Zeitpunkt t₀+Δt, wird das zweite Bodenbild 2' aufgenommen. Das zweite Bodenbild 2' ist in der Regel jedoch nicht identisch mit dem ersten Bodenbild 2, sodass es nicht korrekt wäre, die Pflanze an der Position x₀, y₀ zu entfernen. Die Datenverarbeitungseinheit 3 überlagert deshalb die beiden Bilder unter Verwendung herkömmlicher Bildverarbeitungsbibliotheken und stellt einen Überlappungsbereich 16 fest, in dem die Bilder identisch sind. Der Verschiebungsvektor 14 wird als jene Distanz Δy identifiziert, um die die beiden Bodenbilder 2, 2' relativ zueinander in Fahrtrichtung 15 verschoben sind.

In Folge korrigiert die Datenverarbeitungseinheit die Positionsdaten 13 um den Verschiebungsvektor 14. Mit anderen Worten, die x- und y-Koordinaten der detektierten Unkrautpflanze 12 werden um den Verschiebungsvektor 14 reduziert, um korrigierte Positionsdaten 13' zu erhalten. Die Datenverarbeitungseinheit 3 steuert nun das landwirtschaftliche Gerät 4 mit den korrigierten Positionsdaten 13' derart an, dass es die erkannte Unkrautpflanzen 12 an der Position (x₀',y₀') = (x₀, y₀ - Δy) entfernt oder auf chemischem Wege vernichtet. Selbstverständlich ist dieses Verfahren nicht auf eindimensionale Verschiebungsvektoren 14 beschränkt.

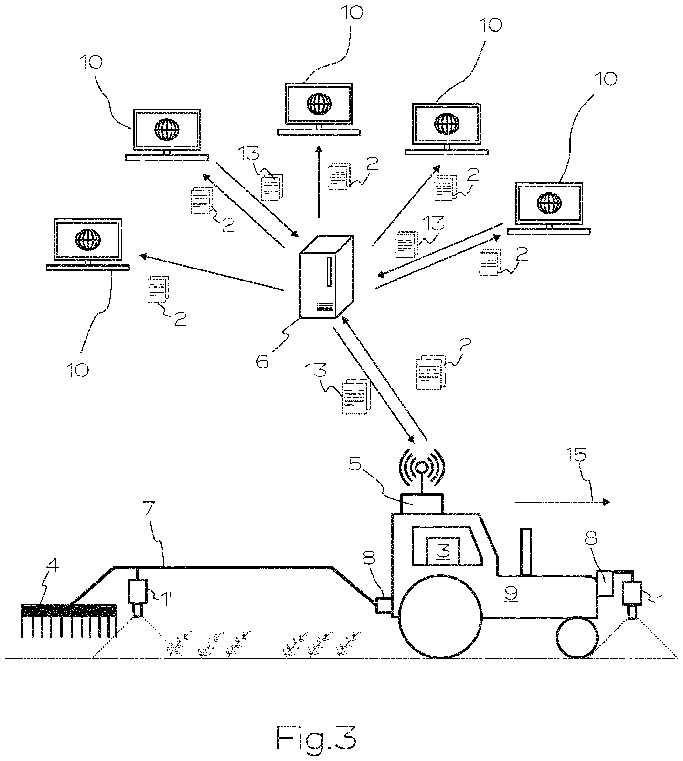

Fig. 3 zeigt eine weitere schematische Darstellung einer Ausführungsform einer erfindungsgemäßen Vorrichtung. Die Vorrichtung umfasst wiederum eine Trägervorrichtung 7, an der jedoch nur die zweite Bildaufnahmeeinrichtung 1' in Form einer Kamera angeordnet ist.

Die erste Bildaufnahmeeinrichtung 1 ist nicht an der Trägervorrichtung 7, sondern an einer zweiten Koppelvorrichtung 8 an der Front des Arbeitsgeräts 9 angeordnet. Dies hat den Vorteil, dass die gesamte Länge des Arbeitsgeräts 9 genutzt werden kann, um eine möglichst lange Zeitspanne zur Detektion der Unkrautpflanzen zu ermöglichen. Folglich kann die Trägervorrichtung 7 in dieser Ausführung kürzer ausgeführt sein, oder das Arbeitsgerät 9 kann mit einer höheren Geschwindigkeit bewegt werden. Die weiteren Merkmale dieses Ausführungsbeispiels entsprechen jenen des Ausführungsbeispiels gemäß Fig. 1.

In einer weiteren Ausführungsform kann das Arbeitsgerät nur mit einer einzigen Bildaufnahmeeinrichtung 1 in Form einer Kamera ausgestattet sein. In dieser Ausführungsform stoppt das Arbeitsgerät, nimmt ein Bild des Bodens auf und wartet auf die Rückmeldung mit den Positionsdaten von den Endgeräten, bevor das landwirtschaftliche Gerät den Boden an den entsprechenden Positionsdaten bearbeitet. Danach bewegt sich das Arbeitsgerät um eine definierte Distanz weiter und es wird das nächste Bild aufgenommen. Diese Ausführung ist insbesondere dann sinnvoll, wenn es sich bei dem Arbeitsgerät um ein autonom fahrbares Fahrzeug, beispielsweise einen Roboter, handelt.

Die Erfindung beschränkt sich jedoch nicht auf die dargestellten Ausführungsformen, sondern umfasst sämtliche Vorrichtungen und Verfahren im Rahmen der nachfolgenden Patentansprüche.

### Bezugszeichenliste

- 1, 1': Bildaufnahmeeinrichtung
- 2, 2`: Bodenbild
- 3: Datenverarbeitungseinheit
- 4: Landwirtschaftliches Gerät
- 5: Kommunikationseinrichtung
- 6: Server
- 7: Trägervorrichtung
- 8: Koppelvorrichtung
- 9: Fahrbares Arbeitsgerät
- 10: Endgerät
- 11: Kulturpflanze
- 12: Unkrautpflanzen
- 13, 13': Positionsdaten
- 14: Verschiebungsvektor
- 15: Fahrtrichtung
- 16: Überlappungsbereich

## Patentansprüche

1. Vorrichtung zur Entfernung oder Vernichtung von Unkrautpflanzen (12), umfassend
- eine erste Bildaufnahmeeinrichtung (1) zur Aufnahme eines ersten Bodenbildes (2),
- eine damit verbundene Datenverarbeitungseinheit (3) und
- ein von der Datenverarbeitungseinheit (3) angesteuertes landwirtschaftliches Gerät (4), das zur punktuellen Entfernung oder Vernichtung von Unkraut ausgebildet ist,
**dadurch gekennzeichnet, dass** die Datenverarbeitungseinheit (3) dazu ausgeführt ist,
- das erste Bodenbild (2) von der ersten Bildaufnahmeeinrichtung (1) entgegenzunehmen,
- das erste Bodenbild (2) direkt oder über eine Kommunikationseinrichtung (5) an eine Vielzahl verbundener Endgeräte (10) zu übermitteln,
- von zumindest einem verbundenen Endgerät (10) manuell bestimmte Positionsdaten (13) entgegenzunehmen, welche die Position von auf dem ersten Bodenbild (2) durch einen oder mehrere Benutzer erkannten Unkrautpflanzen (12) und/oder Kulturpflanzen (11) und/oder Bodenstrukturen, beispielsweise Pflanzreihen, kennzeichnen,
- das landwirtschaftliche Gerät (4) auf Grundlage der Positionsdaten (13) derart anzusteuern, dass es die Unkrautpflanzen (12) selektiv entfernt oder vernichtet.

2. Vorrichtung nach Anspruch 1, **dadurch gekennzeichnet, dass** die Datenverarbeitungseinheit (3) dazu ausgeführt ist, das erste Bodenbild (2) über eine Kommunikationseinrichtung (5) an einen Server (6) zu übermitteln und vom Server (6) die Positionsdaten (13) entgegenzunehmen.

3. Vorrichtung nach einem der Ansprüche 1 oder 2, **dadurch gekennzeichnet, dass**
- eine mit der Datenverarbeitungseinheit (3) verbundene zweite Bildaufnahmeeinrichtung (1') zur Aufnahme eines zweiten Bodenbildes (2') vorgesehen ist, wobei
- die Datenverarbeitungseinheit (3) dazu ausgeführt ist,
∘ das zweite Bodenbild (2') von der zweiten Bildaufnahmeeinrichtung (1') entgegenzunehmen und dem ersten Bodenbild (2) zur Bestimmung eines Verschiebungsvektors (14) zu überlagern,
∘ die Positionsdaten (13) um den Verschiebungsvektor (14) zu korrigieren, um korrigierte Positionsdaten (13') zu erhalten, und
∘ das landwirtschaftliche Gerät (4) mit den korrigierten Positionsdaten (13') anzusteuern.

4. Vorrichtung nach Anspruch 3, **dadurch gekennzeichnet, dass** sich die zweite Bildaufnahmeeinrichtung (1') in unmittelbarer Nähe des landwirtschaftlichen Geräts (4) befindet, vorzugsweise in einem Abstand von unter 1 m und besonders bevorzugt auf diesem montiert ist oder ein Teil des landwirtschaftlichen Geräts (4) ist.

5. Vorrichtung nach einem der Ansprüche 1 bis 4, **dadurch gekennzeichnet, dass** die erste Bildaufnahmeeinrichtung (1) und das landwirtschaftliche Gerät (4) auf einer Trägervorrichtung (7) mit einer Koppelvorrichtung (8) zur Verbindung mit einem fahrbaren Arbeitsgerät (9) angeordnet sind.

6. Vorrichtung nach einem der Ansprüche 3 bis 5, **dadurch gekennzeichnet, dass** die zweite Bildaufnahmeeinrichtung (1') und das landwirtschaftliche Gerät (4) auf einer Trägervorrichtung (7) mit einer Koppelvorrichtung (8) zur Verbindung mit einem fahrbaren Arbeitsgerät (9) angeordnet sind.

7. Vorrichtung nach einem der Ansprüche 3 bis 6, **dadurch gekennzeichnet, dass** der Abstand der ersten Bildaufnahmeeinrichtung (1) zur zweiten Bildaufnahmeeinrichtung (1') mehr als 3 m, vorzugsweise mehr als 5 m, besonders bevorzugt mehr als 7 m beträgt.

8. Vorrichtung nach einem der Ansprüche 1 bis 7, **dadurch gekennzeichnet, dass** das landwirtschaftliche Gerät (4) ein zur punktuellen Bodenbearbeitung ausgeführtes Jätwerkzeug, eine zur punktuellen Bodenbearbeitung ausgeführte Unkrautspritze oder ein zur punktuellen Bodenbearbeitung ausgeführtes Flammgerät ist.

9. Fahrbares Arbeitsgerät (9), vorzugsweise autonom fahrbares Arbeitsgerät (9), umfassend eine Vorrichtung zur Entfernung oder Vernichtung von Unkraut nach einem der Ansprüche 1 bis 8.

10. Fahrbares Arbeitsgerät (9) nach Anspruch 9, **dadurch gekennzeichnet, dass** die Vorrichtung zur Entfernung oder Vernichtung von Unkraut derart am Arbeitsgerät (9) angeordnet ist, dass die erste Bildaufnahmeeinrichtung (1)
a. in einem Winkel von etwa 90° zur Fahrtrichtung auf den Boden gerichtet ist, um Unkrautpflanzen (12) und/oder Kulturpflanzen (11) zu erfassen, oder
b. in einem Winkel von vorzugsweise zwischen etwa 5° und etwa 45° zur Fahrtrichtung nach vorne gerichtet ist, um Bodenstrukturen, beispielsweise Pflanzreihen, zu erfassen.

11. Fahrbares Arbeitsgerät (9) nach Anspruch 9 oder 10, **dadurch gekennzeichnet, dass** sich die erste Bildaufnahmeeinrichtung (1) in der Fahrtrichtung des Arbeitsgeräts (9) vor der zweiten Bildaufnahmeeinrichtung (1') befindet.

12. Fahrbares Arbeitsgerät (9) nach einem der Ansprüche 9 bis 11, **dadurch gekennzeichnet, dass** die erste Bildaufnahmeeinrichtung (1) in Fahrtrichtung vor dem Arbeitsgerät (9) angeordnet ist und die zweite Bildaufnahmeeinrichtung (1') in Fahrtrichtung hinter dem Arbeitsgerät (9) angeordnet ist.

13. Fahrbares Arbeitsgerät (9) nach einem der Ansprüche 9 bis 12, **dadurch gekennzeichnet, dass** die maximale Fahrgeschwindigkeit des Arbeitsgeräts (9) im Betrieb unter 15 km/h, vorzugsweise unter 10 km/h, und besonders bevorzugt unter 5 km/h liegt.

14. Verfahren zur Entfernung oder Vernichtung von Unkrautpflanzen (12) mit einem, von einer Datenverarbeitungseinheit (3) angesteuerten landwirtschaftlichen Gerät (4), das zur punktuellen Entfernung oder Vernichtung von Unkrautpflanzen (12) ausgebildet ist, umfassend die folgenden Schritte:
a. Aufnahme eines ersten Bodenbildes (2) durch eine erste, mit der Datenverarbeitungseinheit (3) verbundenen Bildaufnahmeeinheit (1),
b. Übermittlung des ersten Bodenbildes (2) an eine Vielzahl verbundener Endgeräte (10),
c. Entgegennahme, durch die Datenverarbeitungseinheit (3), von zumindest einem verbundenen Endgerät (10), manuell bestimmter Positionsdaten (13), welche die Position von auf dem ersten Bodenbild (2) durch einen oder mehrere Benutzer erkannten Unkrautpflanzen (12) und/oder Kulturpflanzen (11) und/oder Bodenstrukturen, beispielsweise Pflanzreihen, kennzeichnen,
d. Ansteuerung, durch die Datenverarbeitungseinheit (3), des landwirtschaftlichen Geräts (4) auf Grundlage der Positionsdaten (13) zur selektiven Entfernung oder Vernichtung von Unkrautpflanzen (12).

15. Verfahren nach Anspruch 14, **dadurch gekennzeichnet, dass** die Datenverarbeitungseinheit (3) das erste Bodenbild (2) über eine Kommunikationseinrichtung (5) an einen Server (6) übermittelt und vom Server (6) die Positionsdaten (13) entgegennimmt.

16. Verfahren nach einem der Ansprüche 14 oder 15, **dadurch gekennzeichnet, dass** die Datenverarbeitungseinheit (3)
- ein zweites Bodenbild (2') von einer zweiten Bildaufnahmeeinheit (1') entgegennimmt und dem ersten Bodenbild (2) zur Bestimmung eines Verschiebungsvektors (14) überlagert, und
- die Positionsdaten (13) zur Bestimmung korrigierter Positionsdaten (13') um den Verschiebungsvektor (14) korrigiert, und
- das landwirtschaftliche Gerät (4) mit den korrigierten Positionsdaten (13') ansteuert.

17. Verfahren nach Anspruch 15 oder 16, **dadurch gekennzeichnet, dass** der Server (6) die ersten Bodenbilder (2) an eine Vielzahl verbundener Endgeräte (10) übermittelt, von zumindest einem der Endgeräte (10) Positionsdaten (13) entgegennimmt, und diese Positionsdaten (13) an die Datenverarbeitungseinheit (3) weiterleitet.

18. Verfahren nach Anspruch 17, **dadurch gekennzeichnet, dass** der Server (6) von mehreren Endgeräten (10) Positionsdaten (13) entgegennimmt, und diese Vielzahl an Positionsdaten (13) einer statistischen Analyse unterwirft, beispielsweise einer Bestimmung des Mittelwerts und der Standardabweichung der Positionsdaten (13), und das Ergebnis der statistischen Analyse an die Datenverarbeitungseinheit (3) weiterleitet.

19. Computerlesbares Speichermedium, **dadurch gekennzeichnet, dass** es computerlesbare Instruktionen umfasst, die eine Datenverarbeitungseinheit (3) mit einem von der Datenverarbeitungseinheit (3) angesteuerten landwirtschaftlichen Gerät (4), das zur punktuellen Entfernung oder Vernichtung von Unkrautpflanzen (12) ausgebildet ist, zur Ausführung eines Verfahrens nach einem der Ansprüche 14 bis 18 veranlassen.

## Claims

1. A device for removing or killing weeds (12), comprising
- a first image capturing apparatus (1) for capturing a first ground image (2),
- a data processing unit (3) connected thereto and
- an agricultural machine (4) controlled by the data processing unit (3), which is designed for the targeted removal or killing of weeds,
**characterised in that** the data processing unit (3) is configured to
- receive the first ground image (2) from the first image capturing apparatus (1),
- transmit the first ground image (2) to a plurality of connected terminals (10) either directly or via a communication means (5),
- receive manually determined position data (13) from at least one connected terminal (10), which indicate the position of weeds (12) and/or crops (11) and/or ground structures, e.g. rows of plants, which have been detected in the first ground image (2) by one or more users,
- on the basis of the position data (13), control the agricultural machine (4) in such a way that it removes or kills the weeds (12) in a targeted manner.

2. The device according to claim 1, **characterised in that** the data processing unit (3) is configured to transmit the first ground image (2) to a server (6) via a communication means (5) and to receive the position data (13) from the server (6).

3. The device according to one of claims 1 or 2, **characterised**
- **in that** a second image capturing apparatus (1'), which is connected to the data processing unit (3), is provided for capturing a second ground image (2'), wherein
- the data processing unit (3) is configured to
∘ receive the second ground image (2') from the second image capturing apparatus (1') and to superimpose it on the first ground image (2) for determining a displacement vector (14),
∘ correct the position data (13) by the displacement vector (14) in order to obtain corrected position data (13'), and
∘ control the agricultural machine (4) with the corrected position data (13').

4. The device according to claim 3, **characterised in that** the second image capturing apparatus (1') is located in close proximity to the agricultural machine (4), preferably at a distance of below 1 m and is particularly preferably mounted on or part of the agricultural machine (4).

5. The device according to one of claims 1 to 4, **characterised in that** the first image capturing apparatus (1) and the agricultural machine (4) are arranged on a carrier device (7) with a coupling device (8) for the connection to a moveable implement (9).

6. The device according to one of claims 3 to 5, **characterised in that** the second image capturing apparatus (1') and the agricultural machine (4) are arranged on a carrier device (7) with a coupling device (8) for the connection to a moveable implement (9).

7. The device according to one of claims 3 to 6, **characterised in that** the distance from the first image capturing apparatus (1) to the second image capturing apparatus (1') is more than 3 m, preferably more than 5 m, particularly preferably more than 7 m.

8. The device according to one of claims 1 to 7, **characterised in that** the agricultural machine (4) is a weeding tool designed for the targeted soil tillage, a weed sprayer designed for the targeted soil tillage or a weed burner designed for the targeted soil tillage.

9. A moveable implement (9), preferably an autonomously movable implement (9), comprising a device for removing or killing weeds according to one of claims 1 to 8.

10. The movable implement (9) according to claim 9, **characterised in that**, the device for removing or killing weeds is arranged on the implement (9) in such a way that the first image capturing apparatus (1)
a. is directed towards the ground in an angle of about 90° to the direction of travel in order to detect weeds (12) and/or crops (11) or
b. is directed straight ahead in an angle of preferably between about 5° and about 45° to the direction of travel in order to detect ground structures such as rows of plants.

11. The movable implement (9) according to claim 9 or 10, **characterised in that** the first image capturing apparatus (1) is located in front of the second image capturing apparatus (1') in the direction of travel of the implement (9).

12. The movable implement (9) according to one of claims 9 to 11, **characterised in that** the first image capturing apparatus (1) is arranged in front of the implement (9) in the direction of travel and **in that** the second image capturing apparatus (1') is arranged behind the implement (9) in the direction of travel.

13. The movable implement (9) according to one of claims 9 to 12, **characterised in that**, in operation, the maximum travelling speed of the implement (9) is below 15 km/h, preferably below 10 km/h, and particularly preferably below 5 km/h.

14. A method for removing or killing weeds (12) with an agricultural machine (4), which is controlled by a data processing unit (3) and is designed for the targeted removal or killing of weeds (12), comprising the following steps:
a. capturing a first ground image (2) by a first image capturing unit (1) connected to the data processing unit (3),
b. transmitting the first ground image (2) to a plurality of connected terminals (10),
c. receiving, by the data processing unit (3), manually determined position data (13) from at least one connected terminal (10), which indicate the position of weeds (12) and/or crops (11) and/or ground structures, e.g. rows of plants, which have been detected in the first ground image (2) by one or more users,
d. controlling, by the data processing unit (3), the agricultural machine (4) on the basis of the position data (13) for removing or killing weeds (12) in a targeted manner.

15. The method according to claim 14, **characterised in that** the data processing unit (3) transmits the first ground image (2) to a server (6) via a communication means (5) and receives the position data (13) from the server (6).

16. The method according to one of claims 14 or 15, **characterised in that** the data processing unit (3)
- receives a second ground image (2') from a second image capturing apparatus (1') and superimposes it on the first ground image (2) for determining a displacement vector (14), and
- corrects the position data (13) by the displacement vector (14) for determining corrected position data (13'), and
- controls the agricultural machine (4) with the corrected position data (13').

17. The method according to claim 15 or 16, **characterised in that** the server (6) transmits the first ground images (2) to a plurality of connected terminals (10), receives position data (13) from at least one of the terminals (10) and forwards these position data (13) to the data processing unit (3).

18. The method according to claim 17, **characterised in that** the server (6) receives position data (13) from multiple terminals (10), subjects this plurality of position data (13) to a statistical analysis, for example a determination of the average value and the standard deviation of the position data (13), and forwards the result of the statistical analysis to the data processing unit (3).

19. A computer-readable storage medium, **characterised in that** it comprises computer-readable instructions which cause a data processing unit (3) with an agricultural machine (4) controlled by the data processing unit (3) and adapted for targeted removal or killing of weeds (12) to carry out a method according to one of claims 14 to 18.

## Revendications

1. Dispositif pour l'élimination ou la destruction de plantes adventices (12), comprenant
- un premier dispositif de capture d'image (1) pour capturer une première image du sol (2),
- une unité de traitement de données (3) reliée à ce dernier, et
- un appareil agricole (4) commandé par l'unité de traitement de données (3), qui est configuré pour l'élimination ou la destruction ponctuelle de plantes adventices,
**caractérisé en ce que** l'unité de traitement de données (3) est configurée pour
- recevoir la première image du sol (2) provenant du premier dispositif de capture d'image (1),
- transmettre la première image du sol (2) directement ou par l'intermédiaire d'un dispositif de communication (5) à une pluralité de terminaux (10) connectés,
- recevoir d'au moins un terminal connecté (10) des données de position (13) déterminées manuellement, qui caractérisent la position des plantes adventices (12) et/ou des plantes cultivées (11) et/ou des structures du sol, par exemple des rangées de plantes, reconnues sur la première image du sol (2) par un ou plusieurs utilisateurs,
- commander l'appareil agricole (4) sur la base des données de position (13) de telle sorte qu'il élimine ou détruise sélectivement les plantes adventices (12).

2. Dispositif selon la revendication 1, **caractérisé en ce que** l'unité de traitement de données (3) est configurée pour transmettre la première image du sol (2) à un serveur (6) à travers un dispositif de communication (5) et pour recevoir du serveur (6) les données de position (13).

3. Dispositif selon la revendication 1 ou 2, **caractérisé en ce que**
- un deuxième dispositif de capture d'image (1') connecté à l'unité de traitement de données (3) est prévu pour la capture d'une deuxième image du sol (2'), dans lequel
- l'unité de traitement de données (3) est réalisée pour
∘ recevoir la deuxième image du sol (2') du deuxième dispositif de capture d'image (1') et la superposer à la première image du sol (2) pour déterminer un vecteur de déplacement (14),
∘ corriger les données de position (13) du vecteur de déplacement (14) afin d'obtenir des données de position corrigées (13'), et
∘ commander l'appareil agricole (4) avec les données de position corrigées (13').

4. Dispositif selon la revendication 3, **caractérisé en ce que** le deuxième dispositif de capture d'image (1') se trouve directement à proximité de l'appareil agricole (4), préférablement à une distance inférieure à 1 m et, de façon particulièrement préférée, est monté sur celui-ci ou fait partie de l'appareil agricole (4).

5. Dispositif selon l'une des revendications 1 à 4, **caractérisé en ce que** le premier dispositif de capture d'image (1) et l'appareil agricole (4) sont disposés sur un dispositif de support (7) avec un dispositif d'accouplement (8) pour la liaison avec un appareil de travail mobile (9).

6. Dispositif selon l'une des revendications 3 à 5, **caractérisé en ce que** le deuxième dispositif de capture d'image (1') et l'appareil agricole (4) sont disposés sur un dispositif de support (7) avec un dispositif d'accouplement (8) pour la liaison avec un appareil de travail mobile (9).

7. Dispositif selon l'une des revendications 3 à 6, **caractérisé en ce que** la distance entre le premier dispositif de capture d'image (1) et le deuxième dispositif de capture d'image (1') est supérieure à 3 m, préférablement supérieure à 5 m, de façon particulièrement préférée supérieure à 7 m.

8. Dispositif selon l'une des revendications 1 à 7, **caractérisé en ce que** l'appareil agricole (4) est un outil de désherbage réalisé pour le travail localisé du sol, un pulvérisateur de désherbage réalisé pour le travail localisé du sol ou un appareil à flamme réalisé pour le travail localisé du sol.

9. Appareil de travail mobile (9), préférablement un appareil de travail mobile autonome (9), comprenant un dispositif pour éliminer ou détruire les plantes adventices selon l'une des revendications 1 à 8.

10. Appareil de travail mobile (9) selon la revendication 9, **caractérisé en ce que** le dispositif pour l'élimination ou la destruction des plantes adventices est disposé par rapport à l'appareil de travail (9) de telle sorte que le premier dispositif de capture d'image (1)
a. est dirigé vers le sol selon un angle d'environ 90° par rapport à la direction de déplacement, afin de détecter les plantes adventices (12) et/ou les plantes cultivées (11), ou
b. est dirigé vers l'avant, préférablement selon un angle compris entre environ 5° et environ 45° par rapport au sens de déplacement, afin de détecter les structures du sol, par exemple les rangées de plantes.

11. Appareil de travail mobile (9) selon la revendication 9 ou 10, **caractérisé en ce que** le premier dispositif de capture d'image (1) est situé avant le deuxième dispositif de capture d'image (1') dans le sens de déplacement de l'appareil de travail (9).

12. Appareil de travail mobile (9) selon l'une des revendications 9 à 11, **caractérisé en ce que** le premier dispositif de capture d'image (1) est disposé avant l'appareil de travail (9) dans le sens de déplacement et le deuxième dispositif de capture d'image (1') est disposé derrière l'appareil de travail (9) dans le sens de déplacement.

13. Appareil de travail mobile (9) selon l'une des revendications 9 à 12, **caractérisé en ce que** la vitesse de déplacement maximale de l'appareil de travail (9) en fonctionnement est inférieure à 15 km/h, préférablement inférieure à 10 km/h, et de façon particulièrement préférée inférieure à 5 km/h.

14. Procédé pour éliminer ou détruire les plantes adventices (12) avec un appareil agricole (4) commandé par une unité de traitement de données (3), qui est configuré pour éliminer ou détruire ponctuellement les plantes adventices (12), comprenant les étapes suivantes :
a. capture d'une première image du sol (2) par une première unité de capture d'image (1) connectée à l'unité de traitement de données (3),
b. transmission de la première image du sol (2) à une pluralité de terminaux (10) connectés,
c. recevoir, par l'unité de traitement de données (3), d'au moins un terminal connecté (10) des données de position (13) déterminées, manuellement, qui caractérisent la position des plantes adventices (12) et/ou des plantes cultivées (11) et/ou des structures du sol, par exemple des rangées de plantes, reconnues sur la première image du sol (2) par un ou plusieurs utilisateurs,
d. commande, par l'unité de traitement de données (3), de l'appareil agricole (4) sur la base des données de position (13) pour l'élimination ou la destruction sélective des plantes adventices (12).

15. Procédé selon la revendication 14, **caractérisé en ce que** l'unité de traitement de données (3) transmet la première image du sol (2) à un serveur (6) à travers un dispositif de communication (5) et reçoit du serveur (6) les données de position (13).

16. Procédé selon la revendication 14 ou 15, **caractérisé en ce que** l'unité de traitement de données (3)
- reçoit une deuxième image du sol (2') d'une deuxième unité de capture d'image (1') et la superpose à la première image du sol (2) pour déterminer un vecteur de déplacement (14), et
- corrige les données de position (13) pour déterminer des données de position corrigées (13') du vecteur de déplacement (14), et
- commande l'appareil agricole (4) avec les données de position corrigées (13').

17. Procédé selon la revendication 15 ou 16, **caractérisé en ce que** le serveur (6) transmet les premières images du sol (2) à une pluralité de terminaux (10) connectés, reçoit des données de position (13) d'au moins un des terminaux (10), et transmet ces données de position (13) à l'unité de traitement de données (3).

18. Procédé selon la revendication 17, **caractérisé en ce que** le serveur (6) reçoit des données de position (13) de plusieurs terminaux (10), et soumet cette pluralité de données de position (13) à une analyse statistique, par exemple une détermination de la valeur moyenne et de l'écart type des données de position (13), et transmet le résultat de l'analyse statistique à l'unité de traitement de données (3).

19. Support de mémoire lisible par ordinateur, **caractérisé en ce qu'**il comprend des instructions lisibles par ordinateur qui amènent une unité de traitement de données (3), avec un appareil agricole (4) commandé par l'unité de traitement de données (3) et configuré pour enlever ou détruire ponctuellement des plantes adventices (12), à exécuter un procédé selon l'une des revendications 14 à 18.
